(19) Europäisches Patentamt
European Patent Office
Office européen des brevets

(11) **EP 2 546 562 A2**

(12) **EUROPEAN PATENT APPLICATION**
published in accordance with Art. 153(4) EPC

(43) Date of publication:
**16.01.2013 Bulletin 2013/03**

(51) Int Cl.:
*F16L 55/045* (2006.01)    *G01F 23/00* (2006.01)
*G01F 25/00* (2006.01)    *F17C 13/00* (2006.01)

(21) Application number: **11753547.6**

(22) Date of filing: **02.03.2011**

(86) International application number:
**PCT/KR2011/001417**

(87) International publication number:
**WO 2011/111942 (15.09.2011 Gazette 2011/37)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.03.2010 KR 20100021691**

(71) Applicant: **Flowtech Co., Ltd.
Incheon 403-030 (KR)**

(72) Inventors:
• **YANG, Jae Gu
Incheon 405-220 (KR)**

• **YANG, Ji Suk
Incheon 405-220 (KR)**
• **OH, Sang Ki
Incheon 403-755 (KR)**
• **KIM, Mi Jung
Incheon 405-300 (KR)**

(74) Representative: **Gulde Hengelhaupt Ziebig &
Schneider
Patentanwälte - Rechtsanwälte
Wallstrasse 58/59
10179 Berlin (DE)**

(54) **METHOD FOR PRECISELY AND RELIABLY CONTROLLING LIQUID LEVEL OF PRESSURE TANK WITH MULTIPLE SENSORS**

(57) Disclosed herein is a method of controlling the water level of a pressure tank of a piping system. The piping system includes a pressure tank, level sensors, a gas supply device, a supply valve and an exhaust valve. The method includes: measuring the water level; calculating absolute values of difference values between water level measurement values measured by the level sensors, thus obtaining measurement deviation values; comparing the measurement deviation values with a preset deviation value; determining whether an abnormality has occurred in each level sensor; outputting the mean of the measurements of the level sensors, while excluding the measurement of an abnormal level sensor(s), as a reference water-level-control value; and comparing the reference water-level-control value with a preset reference water level value, and determining whether to raise or lower the water level, and supplying gas into the pressure tank or exhausting gas therefrom.

[Fig. 2]

EP 2 546 562 A2

## Description

### Technical Field

The present invention relates, in general, to a method of controlling the water level of a pressure tank and, more particularly, to a method of precisely and reliably controlling the water level of a pressure tank with multiple level sensors in such a way that irregularities in the level sensors are checked.

### Background Art

Generally, circulation piping systems for airconditioning or piping systems for fluid transfer include a pressure tank (the former case is referred to as an anti water hammering tank, and the latter case as an expansion tank) so as to prevent sharp variations in flow rate and pressure when a pump suddenly stops or a valve is suddenly closed from causing water hammering or preventing the expansion of water in a circulation piping system from damaging the piping system. In such a pressure tank, gas is present above the surface of water in the tank. Because of the characteristics resulting from the gas being a compressible fluid, when expansion or water hammering occurs in the piping system, the gas absorbs shock waves or draws water into the piping system to prevent the pressure in the pipe from dropping. Depending on the water level of the pressure tank, the volume of gas in the tank is set. Therefore, precisely and reliably controlling the water level of the pressure tank to an appropriate level puts an energy source in reserve to ensure the stability of the system against expansion or water hammering pressure waves. Variation in the water level of the pressure tank means variation in a reference pressure of the entirety of the piping system. An increase in pressure may damage the equipment or pipes of the piping system. If the pressure drops below the saturation vapor pressure of water, shock waves caused when a water column returns after the water column has been separated may damage the equipment or pipes. Therefore, to keep the piping system stable, the water level of the pressure tank must always be controlled such that it is maintained within an appropriate level range.

The control of the water level of the pressure tank can be carried out by supplying gas such as air or nitrogen into the pressure tank or exhausting gas therefrom.

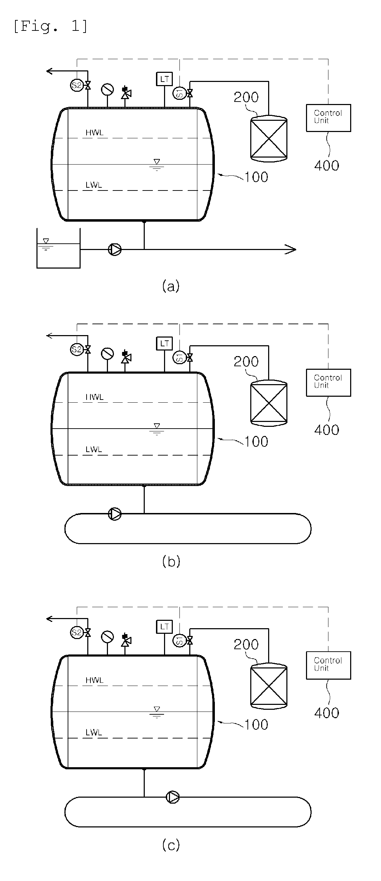

In detail, as shown in Fig. 1(a), in an anti-water hammering device for an open piping system whose purpose is to maintain the water level of a pressure tank within an appropriate level range, a level sensor LT senses the water level of the pressure tank 100 in real time. If the water level rises, a supply valve S1 opens so that a gas supply device 200 supplies gas into the pressure tank 100, thereby lowering the water level to the appropriate level. If the water level lowers, an exhaust valve S2 opens so that gas is exhausted out of the pressure tank 100, thus raising the water level to the appropriate level. Furthermore, as shown in Figs. 1(b) and 1(c), even in an expansion tank system of a circulation piping system (a one-way piping system having an open-end tank or a circulation piping system having a heat storage tank), the water level of a tank is controlled in the above-mentioned manner based on the expansion and contraction of pipe water. For reference, the general construction of the systems of Figs. 1(b) and 1(c), with the only exception of the connection locations of the pressure tanks, are the same, so that their methods for controlling the water level are also the same.

As such, the level sensor must be provided on the pressure tank to control the water level of the pressure tank. In such a conventional system, a single level sensor is provided for each pressure tank. However, if an error occurs in the level sensor or it malfunctions, more gas is supplied into or exhausted from the pressure tank than is needed so that the working pressure of the system varies, thus causing not only the anti-water hammering device to fail or the expansion control device to fail but also causing variations in the pressure of the entirety of the piping system. As a result, the purposes of the anti-water hammering device and the expansion control device, that is, prevention of high or low pressure surge (water hammering) and control of expansion of water attributable to temperature variation, may not be achieved.

Therefore, in such piping systems as a regional airconditioning piping system, a liquid transfer system and a plant, which require high reliability, multiple level sensors are required to precisely and reliably control the water level of a pressure tank.

Although multiple level sensors are used, if an error occurs in a sensor or it malfunctions or breaks down, precise control is no longer possible. Hence, a method is required that can precisely control the water level of the pressure tank in response to conditions of the system in such a way as to detect whether an abnormality occurs in any sensor and exclude a measurement value of the abnormal sensor when determining a reference control value.

### Disclosure

### Technical Problem

Accordingly, the present invention has been made keeping in mind the above problems occurring in the conventional method of controlling the water level of a pressure tank of a piping system, and an object of the present invention is to provide a control method which can control the water level of a pressure tank in response to conditions of a piping system in such a way as to detect whether an abnormality occurs in any sensor and exclude a value measured by the abnormal sensor when determining a reference control value.

**Technical Solution**

In order to accomplish the above object, the present invention provides a method of controlling a water level of a pressure tank of a piping system, the piping system including: a pressure tank provided for water hammering prevention control or expansion control in the piping system; a first level sensor, a second level sensor and a third level sensor independently measuring the water level of the pressure tank; a gas supply device supplying gas into the pressure tank; a supply valve provided to supply gas from the gas supply device into the pressure tank; and an exhaust valve provided to exhaust gas from the pressure tank, the method including: measuring the water level of the pressure tank by the level sensors; calculating absolute values of a difference between water level measurement values of the pressure tank that are measured by the level sensors, thus obtaining measurement deviation values between the respective level sensors; comparing the obtained measurement deviation values between the respective level sensors with a preset deviation value; determining whether an abnormality has occurred in each of the level sensors depending on a result of the comparison between the measurement deviation values and the preset deviation value; outputting a mean of the measurement values of the level sensors, from which a measurement value of a level sensor which is determined as being abnormal has been excluded, as a reference water-level-control value of the pressure tank; and comparing the output reference water-level-control value with a preset reference water level value of the pressure tank, and determining whether to raise or lower the water level of the pressure tank, and supplying gas into the pressure tank or exhausting gas from the pressure tank depending on a result of the determining whether to raise or lower the water level.

The preset deviation value may be defined as a maximum value of a permissible deviation of each of the level sensors when all of the level sensors are normal.

Furthermore, when all of the measurement deviation values between the respective level sensors are equal to or less than the preset deviation value, all of the level sensors may be determined as being normal, and a mean of measurement values of the first level sensor, the second level sensor and the third level sensor may be output as the reference control value; when both a measurement deviation value between the first level sensor and the second level sensor and a measurement deviation value between the second level sensor and the third level sensor are greater than the preset deviation value, and a measurement deviation value between the third level sensor and the first level sensor is equal to or less than the preset deviation value, the second level sensor may be determined as being abnormal, and a mean of the measurement values of the first level sensor and the third level sensor may be output as the reference control value; when a measurement deviation value between the first level sensor and the second level sensor is equal to or less than the preset deviation value, and both a measurement deviation value between the second level sensor and the third level sensor and a measurement deviation value between the third level sensor and the first level sensor are greater than the preset deviation value, the third level sensor may be determined as being abnormal, and a mean of the measurement values of the first level sensor and the second level sensor may be output as the reference control value; and when both a measurement deviation value between the first level sensor and the second level sensor and a measurement deviation value between the third level sensor and the first level sensor are greater than the preset deviation value, and a measurement deviation value between the second level sensor and the third level sensor is equal to or less than the preset deviation value, the first level sensor may be determined as being abnormal, and a mean of the measurement values of the second level sensor and the third level sensor may be output as the reference control value.

Further, when all of measurement deviation values between the respective level sensors are greater than the preset deviation value, two or more level sensors may be determined as being abnormal.

The pressure tank may comprise a plurality of pressure tanks connected to in parallel to each other.

**Advantageous Effects**

In the present invention, measurement values of three or more level sensors are used to detect whether an abnormality occurs on any level sensor. If a level sensor is determined to be abnormal, a measurement value of the abnormal level sensor is excluded when determining a reference control value. Thereby, the water level of the pressure tank can be precisely and reliably controlled in response to conditions of the piping system. Furthermore, a plurality of pressure tanks and level sensors may be provided. In this case, even if one of the pressure tanks and the corresponding level sensor are removed from the piping system for the purpose of maintenance or inspection, controlling the water level of the pressure tank of the system is still available using the remaining level sensors. Therefore, the piping system can be continuously operated under controllable conditions without interrupting the operation of the entirety of the piping system or making an exception of the function of controlling the water level.

**Description of Drawings**

Fig. 1 is of views showing the construction of a piping system provided with a conventional pressure tank;

Fig. 2 is of views illustrating examples of a piping system including a pressure tank provided with multiple sensors, according to a preferred embodiment of the present invention;

Fig. 3 is a view showing in more detail the construction of the system of Fig. 2(c);

Fig. 4 is a flowchart of a method of controlling a water level of the pressure tank according to the present invention; and

Fig. 5 is a table showing in detail the method of controlling the pressure tank as a function of the conditions of the sensors according to the present invention.

**Best Mode**

Hereinafter, a preferred embodiment of a method of controlling a water level of a pressure tank with multiple sensors according to the present invention will be described in detail with reference to the attached drawings.

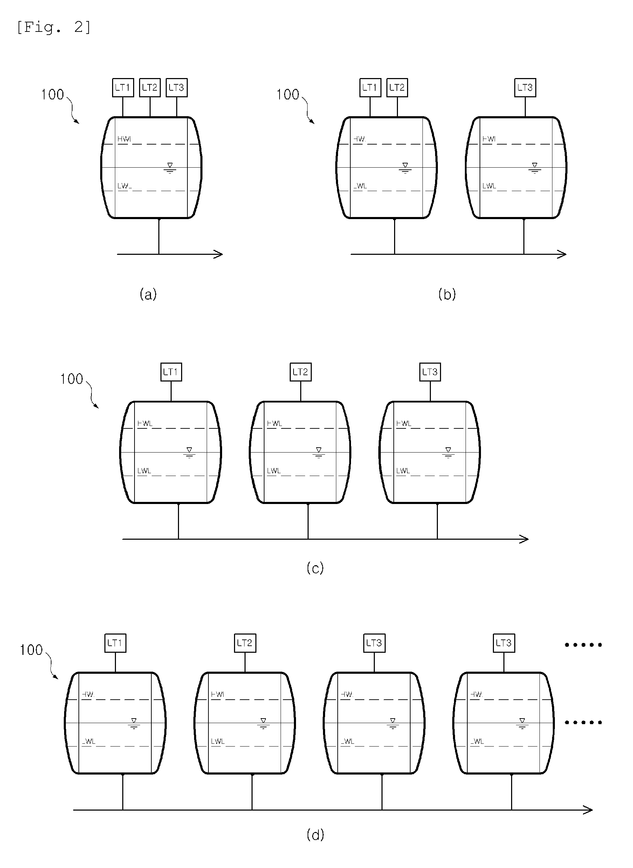

Fig. 2 illustrates examples of a piping system including a pressure tank 100 provided with multiple sensors, according to the preferred embodiment of the present invention. As shown in Fig. 2(a), the piping system according to the present invention may be configured such that it includes a single pressure tank 100 provided with three separate level sensors LT1, LT2 and LT3. Alternatively, as shown in Fig. 2(b), the piping system may be configured such that two separate pressure tanks are provided and one of the pressure tanks is provided with two level sensors while the other pressure tank is provided with a single level sensor. As a further alternative, as shown in Fig. 2(c), the piping system may be configured such that it includes three separate pressure tanks each of which is provided with a single level sensor. As a further alternative, as shown in Fig. 2(d), the piping system may be configured such that it includes four or more separate pressure tanks each of which is provided with a single level sensor.

In the examples of the piping system of Fig. 2, although the number of pressure tanks and the installation locations and the number of level sensors are different from each other, because all of the pressure tanks are connected in parallel to a main pipe, the water levels of the pressure tanks are the same. Further, the pressure tanks must conduct the same operation at the same time in response to pressure conditions in the entire piping system. In other words, the pressure tanks must not be operated in such a way that some of them carry out a gas supply process while the other pressure tanks conduct a gas exhaust process. Therefore, the method of controlling the water level of the pressure tank according to the present invention can be applied in the same way to all of the systems illustrated in Fig. 2 and, hereinafter, the present invention will be described based on the system illustrated in Fig. 2 (c) .

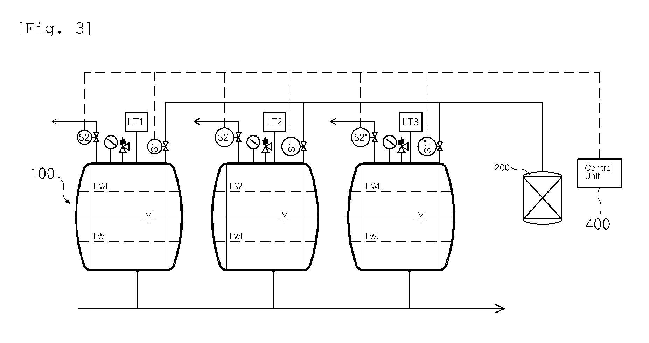

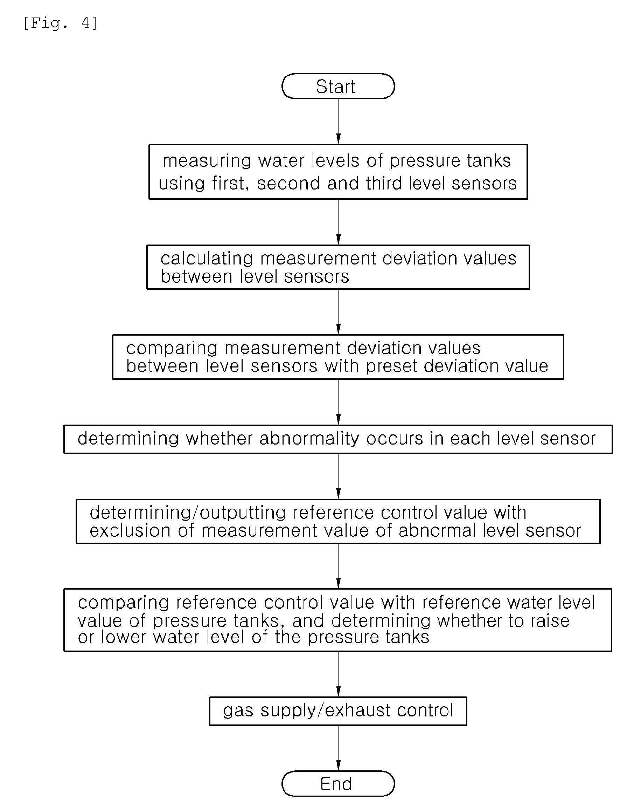

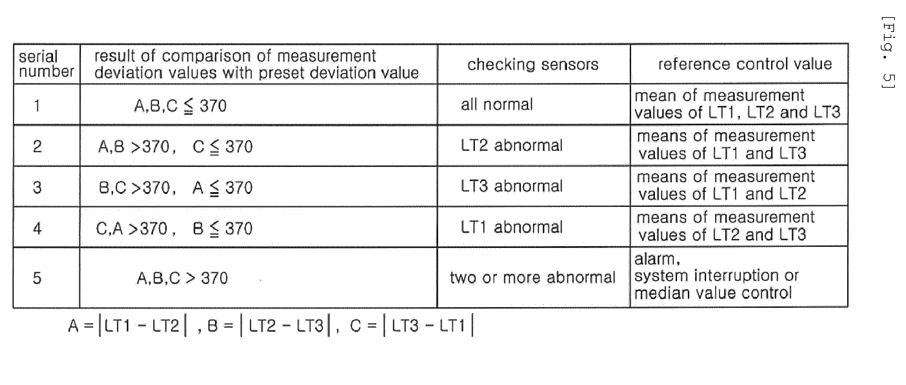

Fig. 3 is a view showing in more detail the construction of the system of Fig. 2(c). Fig. 4 is a flowchart of the method of controlling the water level of the pressure tank according to the present invention. Fig. 5 is a table showing in detail the method of controlling the pressure tank as a function of conditions of the sensors according to the present invention.

As shown in Fig. 3, in the method of controlling the water level of the pressure tank 100 with the sensors according to the present invention, the control unit 400 receives water-level values of the pressure tanks that are respectively measured by a first level sensor LT1, a second level sensor LT2 and a third level sensor LT2 and then stores the values. Subsequently, the control unit 400 calculates absolute values (hereinafter, referred to as 'measurement deviation values') of differences between the stored water-level measurement values of the level sensors and compares the calculated measurement deviation values with a preset deviation value.

Here, the preset deviation value is defined as the maximum of a permissible deviation of each of the level sensors when all of the level sensors are normal. This preset deviation value can be empirically set depending on a reference water level value of the pressure tank. For instance, if the maximum water level of the pressure tank is 3700 mm, it is preferable that the preset deviation value be 370 mm which is 10% of the maximum. If the maximum water level is 1000 mm, it is preferable for the preset deviation value to be 100 mm or more.

Depending on the result of the comparison between each measurement deviation value and the preset deviation value, the control unit 400 determines whether an abnormality has occurred in each level sensor. If a level sensor has been determined to be abnormal, the control unit 400 excludes the measurement value of the abnormal level sensor and then determines and outputs a reference control value (a reference value used to determine whether to raise or lower the water level of the pressure tank and used to control supply or exhaust of gas). Further, the control unit 400 compares the reference control value with the reference water level value and determines whether to raise or lower the water level of the pressure tank. Depending on a result of the determination, the control unit 400 opens supply valves S1, S1' and S1" or exhaust valves S2, S2' and S2" which are provided on the pressure tanks so that gas is supplied thereinto or exhausted therefrom, thereby controlling the water levels of the pressure tanks at the same time.

Fig. 5 briefly illustrates the results of determining whether an abnormality occurs in each level sensor and a method of determining reference control values as a function of the result of the comparison between the measurement deviation values and the preset deviation value. In Fig. 5, the maximum water level of the pressure tank is set as 3700 mm, the reference water level value 1800 mm, and the preset deviation value 370 mm, and the units have been omitted for the sake of convenience.

As shown in Fig. 5, the results of comparison of the measurement deviation values between the respective level sensors to the preset deviation value can be classified into five cases. Also, here, the character A denotes a measurement deviation value |LT1-LT2| between the first level sensor LT1 and the second level sensor LT2, B denotes a measurement deviation value |LT2-LT3| between the second level sensor LT2 and the third level sensor LT3, and C denotes a measurement deviation value |LT3-LT1| between the third level sensor LT3 and the first level sensor LT1.

First, in the case where all of the measurement deviation values A, B and C are equal to or less than the preset deviation value that is 370, because this means that each deviation value between the level sensors falls within the permissible deviation range of the normal conditions, the control unit 400 determines that all of the level sensors are normal and controls the water levels of the pressure tanks at the same time based on the mean of the measurement values of the first level sensor LT1, the second level sensor LT2 and the third level sensor LT3. In other words, if the mean of the measurement values of the first level sensor LT1, the second level sensor LT2 and the third level sensor LT3 is greater than the reference water level value (the water level under normal conditions) of the pressure tanks, the supply valves S1, S1' and S1" open so that gas is supplied into the pressure tanks, thus lowering the water levels of the pressure tanks until the water levels correspond to the reference water level value. If the mean of the measurement values of the first level sensor LT1 and the second level sensor LT2 is less than the reference water level value of the pressure tanks, the exhaust valves S2, S2' and S2" open so that gas is discharged from the pressure tanks, thus raising the water levels of the pressure tanks until the water levels correspond to the reference water level value.

For example, if the measurement value of the first level sensor LT1 is 1700, and the measurement value of the second level sensor LT2 is 1750, and the measurement value of the third level sensor LT3 is 1650,

$$A = |LT1-LT2| = |1700-1750| = 50\ 370,$$

$$B = |LT2-LT3| = |1750-1650| = 100\ 370,$$

and

$$C = |LT3-LT1| = |1650-1700| = 50\ 370.$$

As such, because all of A, B and C are equal to or less than the preset deviation value that is 370, all of the three level sensors are determined as being normal. Therefore, 1700 that is the mean of the measurement values of the level sensors is output as the reference control value. Because this value is less than 1800 that is the reference water level value of the pressure tanks, gas is exhausted from the pressure tanks.

Second, in the case where the measurement deviation values A and B are greater than 370, the preset deviation value, and only C is equal to or less than 370, the control unit 400 determines that the second level sensor LT2 that pertains to both A and B is abnormal, and thus excludes the measurement value of the second level sensor LT2 and uses the mean of the measurement values of the first level sensor LT1 and the third level sensor LT3 to control the water levels of the pressure tanks. In other words, if the mean of the measurement value of the first level sensor LT1 and the measurement value of the third level sensor LT3 is greater than the reference water level value of the pressure tanks, the supply valves S1, S1' and S1" open so that gas is supplied into the pressure tanks, thus lowering the water levels of the pressure tanks until the water levels correspond to the reference water level value. On the other hand, if the mean of the measurement value of the first level sensor LT1 and the measurement value of the third level sensor LT3 is less than the reference water level value of the pressure tanks, the exhaust valves S2, S2' and S2" open so that gas is exhausted from the pressure tanks, thus raising the water levels of the pressure tanks until the water levels correspond to the reference water level value.

For example, if the measurement value of the first level sensor LT1 is 1500, and the measurement value of the second level sensor LT2 is 2000, and the measurement value of the third level sensor LT3 is 1550,

$$A = |LT1-LT2| = |1500-2000| = 500 > 370,$$

$$B = |LT2-LT3| = |2000-1550| = 450 > 370,$$

and

$$C = |LT3-LT1| = |1550-1500| = 50 \quad 370.$$

As such, because A and B are greater than 370, the preset deviation value, and only C is equal to or less than 370, the second level sensor LT2 that pertains to both A and B that are greater than the preset deviation value is determined as being abnormal. The control unit excludes the measurement value of the second level sensor LT2 and outputs, as the reference control value, 1525 that is the mean of 1500 the measurement value of the first level sensor LT1 and 1550 the measurement value of the third level sensor LT3. Because this value is less than the reference water level value of the pressure tanks, gas is exhausted from the pressure tanks.

Third, in the case where the measurement deviation value C is equal to or less than 370 while B and C are greater than 370, the control unit 400 determines that the third level sensor LT3 that pertains to both B and C is abnormal, and thus excludes the measurement value of the third level sensor LT3 and uses the mean of the measurement values of the first level sensor LT1 and the second level sensor LT2 to control the water levels of the pressure tanks. That is, if the mean of the measurement value of the first level sensor LT1 and the measurement value of the second level sensor LT2 is greater than the reference water level value of the pressure tanks, the supply valves S1, S1' and S1" open so that gas is supplied into the pressure tanks, thus lowering the water levels of the pressure tanks until the water levels correspond to the reference water level value. On the other hand, if the mean of the measurement value of the first level sensor LT1 and the measurement value of the second level sensor LT2 is less than the reference water level value of the pressure tanks, the exhaust valves S2, S2' and S2" open so that gas is exhausted from the pressure tanks, thus raising the water levels of the pressure tanks until the water levels correspond to the reference water level value.

For example, if the measurement value of the first level sensor LT1 is 1500, and the measurement value of the second level sensor LT2 is 1550, and the measurement value of the third level sensor LT3 is 2000,

$$A = |LT1-LT2| = |1500-1550| = 50 \quad 370,$$

$$B = |LT2-LT3| = |1550-2000| = 450 > 370,$$

and

$$C = |LT3-LT1| = |2000-1500| = 500 > 370.$$

As such, because B and C are greater than 370 the preset deviation value while A is equal to or less than 370, the preset deviation value, the control unit determines that the third level sensor LT3 that pertains to both B and C is abnormal. Thus, the control unit excludes the measurement value of the third level sensor LT3 and outputs, as the reference control value, 1525 that is the mean of 1500 the measurement value of the first level sensor LT1 and 1550 the measurement value of the second level sensor LT2. Because this value is less than 1800 that is the reference water level value of the pressure tanks, gas is exhausted from the pressure tanks.

Fourth, in the case where the measurement deviation values C and A are greater than 370, the preset deviation value, and only B is equal to or less than 370, the control unit 400 determines that the first level sensor LT1 that pertains to both C and A is abnormal, and thus excludes the measurement value of the first level sensor LT1 and uses the mean of the measurement values of the second level sensor LT2 and the third level sensor LT3 to control the water levels of the pressure tanks. That is, if the mean of the measurement value of the second level sensor LT2 and the measurement value of the third level sensor LT3 is greater than the reference water level value of the pressure tanks, the supply valves S1, S1' and S1" open so that gas is supplied into the pressure tanks, thus lowering the water levels of the pressure tanks until the water levels correspond to the reference water level value. If the mean of the measurement value of the second level sensor LT2 and the measurement value of the third level sensor LT3 is less than the reference water level value of the pressure tanks, the exhaust valves S2, S2' and S2" open so that gas is exhausted from the pressure tanks, thus raising the water levels of the pressure tanks until the water levels correspond to the reference water level value.

For example, if the measurement value of the first level sensor LT1 is 2500, and the measurement value of the second level sensor LT2 is 2000, and the measurement value of the third level sensor LT3 is 2050,

$$A = |LT1-LT2| = |2500-2000| = 500 > 370,$$

$$B = |LT2-LT3| = |2000-2050| = 50 \ 370,$$

and

$$C = |LT3-LT1| = |2500-2050| = 450 > 370.$$

As such, because A and C are greater than 370, the preset deviation value, and B is equal to or less than 370, the first level sensor LT1 is determined as being abnormal. The control unit excludes the measurement value of the first level sensor LT1 and outputs, as the reference control value, 2025 that is the mean of 2000 the measurement value of the second level sensor LT2 and 2050 the measurement value of the third level sensor LT3. Because this value is greater than the reference water level value of the pressure tanks, gas is supplied into the pressure tanks.

Finally, in the case where all of A, B and C are greater than 370, for example, if the measurement values of the level sensors are respectively 1500, 2000 and 2500, two or more level sensors are determined as being abnormal. The control unit thus generates an alarm. In this case, it is preferable that the system be checked after the operation thereof has been stopped, or the mean or median of the three level sensors may be temporarily used. However, the occurrence of an event in which all of the three sensors malfunction at the same time is rare. Therefore, in the present invention, the system can be reliably operated.

The above-stated method can be applied to all of the systems illustrated in Fig. 2. Particularly, as shown in Fig. 2(d), in the system provided with more than three level sensors, it is preferable that arbitrary three level sensors be selected, a reference control value be determined after undergoing the above-mentioned abnormality checking process, and then the water levels of the pressure tanks be controlled at the same time.

In this way, a piping system having a pressure tank provided with a plurality of level sensors according to the present invention checks whether an abnormality occurs on any level sensor and determines a reference control value with the exclusion of a measurement value of a level sensor that has been determined as being abnormal, thus making it possible to precisely and reliably control the water level of the pressure tank.

Although the preferred embodiment of the present invention has been disclosed for illustrative purposes, it will be appreciated that the scope of the invention is not limited thereto, and any and all modifications, variations or equivalent arrangements which can be derived from the embodiment should be considered to be within the scope of the invention.

**Industrial Applicability**

As described above, the present invention is useful when controlling the water level of a pressure tank for an airconditioning and heating system.

**Claims**

1. A method of controlling a water level of a pressure tank of a piping system, the piping system comprising: a pressure tank provided for water hammering prevention control or expansion control in the piping system; a first level sensor, a second level sensor and a third level sensor independently measuring the water level of the pressure tank; a gas supply device supplying gas into the pressure tank; a supply valve provided to supply gas from the gas supply device into the pressure tank; and an exhaust valve provided to exhaust gas from the pressure tank, the method comprising:

measuring the water level of the pressure tank by the level sensors;

calculating absolute values of a difference between water level measurement values of the pressure tank that are measured by the level sensors, thus obtaining measurement deviation values between the respective level sensors;

comparing the obtained measurement deviation values between the respective level sensors with a preset deviation value;

determining whether an abnormality has occurred in each of the level sensors depending on a result of the comparison between the measurement deviation values and the preset deviation value;

outputting a mean of the measurement values of the level sensors, from which a measurement value of a level sensor which is determined as being abnormal has been excluded, as a reference water-level-control value of the pressure tank; and

comparing the output reference water-level-control value with a preset reference water level value of the pressure tank, and determining whether to raise or lower the water level of the pressure tank, and supplying gas into the pressure tank or exhausting gas from the pressure tank depending on a result of the determining whether to raise or lower the water level.

2. The method according to claim 1, wherein the preset deviation value is defined as a maximum value of a permissible deviation of each of the level sensors when all of the level sensors are normal.

3. The method according to claim 1, wherein
when all of the measurement deviation values between the respective level sensors are equal to or less than the preset deviation value, all of the level sensors are determined as being normal, and a mean of measurement values of the first level sensor, the second level sensor and the third level sensor is output as the reference control value;
when both a measurement deviation value between the first level sensor and the second level sensor and a measurement deviation value between the second level sensor and the third level sensor are greater than the preset deviation value, and a measurement deviation value between the third level sensor and the first level sensor is equal to or less than the preset deviation value, the second level sensor is determined as being abnormal, and a mean of the measurement values of the first level sensor and the third level sensor is output as the reference control value;
when a measurement deviation value between the first level sensor and the second level sensor is equal to or less than the preset deviation value, and both a measurement deviation value between the second level sensor and the third level sensor and a measurement deviation value between the third level sensor and the first level sensor are greater than the preset deviation value, the third level sensor is determined as being abnormal, and a mean of the measurement values of the first level sensor and the second level sensor is output as the reference control value; and
when both a measurement deviation value between the first level sensor and the second level sensor and a measurement deviation value between the third level sensor and the first level sensor are greater than the preset deviation value, and a measurement deviation value between the second level sensor and the third level sensor is equal to or less than the preset deviation value, the first level sensor is determined as being abnormal, and a mean of the measurement values of the second level sensor and the third level sensor is output as the reference control value.

4. The method according to claim 3, wherein when all of measurement deviation values between the respective level sensors are greater than the preset deviation value, two or more level sensors are determined as being abnormal.

5. The method according to any one of claims 1 through 4, wherein the pressure tank comprises a plurality of pressure tanks connected to in parallel to each other.

[Fig. 1]

(a)

(b)

(c)

[Fig. 2]

(a)

(b)

(c)

(d)

[Fig. 3]

[Fig. 4]

```
                    ╭─────────────╮
                    │    Start     │
                    ╰──────┬──────╯
                           │
                           ▼
          ┌────────────────────────────────────────┐
          │ measuring water levels of pressure tanks │
          │ using first, second and third level sensors │
          └────────────────┬───────────────────────┘
                           │
                           ▼
          ┌────────────────────────────────────────┐
          │ calculating measurement deviation values │
          │ between level sensors                    │
          └────────────────┬───────────────────────┘
                           │
                           ▼
        ┌──────────────────────────────────────────┐
        │ comparing measurement deviation values     │
        │ between level sensors with preset deviation value │
        └──────────────────┬───────────────────────┘
                           │
                           ▼
    ┌──────────────────────────────────────────────────┐
    │ determining whether abnormality occurs in each level sensor │
    └──────────────────────┬───────────────────────────┘
                           │
                           ▼
    ┌──────────────────────────────────────────────────┐
    │ determining/outputting reference control value with │
    │ exclusion of measurement value of abnormal level sensor │
    └──────────────────────┬───────────────────────────┘
                           │
                           ▼
    ┌──────────────────────────────────────────────────┐
    │ comparing reference control value with reference water level │
    │ value of pressure tanks, and determining whether to raise │
    │ or lower water level of the pressure tanks          │
    └──────────────────────┬───────────────────────────┘
                           │
                           ▼
          ┌────────────────────────────┐
          │   gas supply/exhaust control  │
          └──────────────┬─────────────┘
                           │
                           ▼
                    ╭─────────────╮
                    │     End      │
                    ╰─────────────╯
```

[Fig. 5]

| serial number | result of comparison of measurement deviation values with preset deviation value | checking sensors | reference control value |
|---|---|---|---|
| 1 | A,B,C $\leqq$ 370 | all normal | mean of measurement values of LT1, LT2 and LT3 |
| 2 | A,B >370, C $\leqq$ 370 | LT2 abnormal | means of measurement values of LT1 and LT3 |
| 3 | B,C >370, A $\leqq$ 370 | LT3 abnormal | means of measurement values of LT1 and LT2 |
| 4 | C,A >370, B $\leqq$ 370 | LT1 abnormal | means of measurement values of LT2 and LT3 |
| 5 | A,B,C > 370 | two or more abnormal | alarm, system interruption or median value control |

$$A = |LT1 - LT2| \,, B = |LT2 - LT3|, \ C = |LT3 - LT1|$$